# FASCICULE DE BREVET EUROPEEN

(11) **EP 1 847 322 B1**
(45) Date de publication et mention de la délivrance du brevet: **25.08.2010**
(21) Numéro de dépôt: 07290474.1
(22) Date de dépôt: 17.04.2007
(51) Int. Cl.: B02C 13/28, A01D 34/535

(54) **Dispositif de montage/démontage d'au moins un couteau sur un rotor de machine agricole, et outil equipé d'un tel dispositif**
Vorrichtung zum Montieren/Demontieren von mindestens einem Schneidmesser auf/von einem Rotor einer landwirtschaftlichen Maschine und mit einer solchen Vorrichtung ausgestattetes Werkzeug
Device for installing/removing at least one blade on the rotor of a farm machine, and tool equipped with such a device

(30) Priorité: 20.04.2006 FR 0603522
(43) Date de publication de la demande: 24.10.2007
(73) Titulaire: Forges Gorce, 63920 Peschadoires (FR)
(72) Inventeur: Zgainski, Frédéric, 45100 Orléans (FR)
(74) Mandataire: Chameroy, Claude

(56) Documents cités:
- EP-A- 1 481 581
- DE-U1- 8 704 846
- FR-A1- 2 804 577
- US-A- 3 527 038
- US-A- 3 831 357

## Description

La présente invention se rapporte à un dispositif de montage/démontage d'au moins un couteau de machine agricole, en particulier de faucheuse ou de débroussailleuse, à un outil équipé d'un tel dispositif et à une machine agricole équipée d'un tel outil.

Les machines de type agricole utilisées pour faucher ou débroussailler les abords des routes, notamment les talus d'autoroute, comprennent de manière générale un rotor horizontal tournant sur un axe perpendiculaire à la direction d'avance de ladite débroussailleuse, et des couteaux, ou fléaux, répartis de préférence sur la longueur et la circonférence du rotor. Les couteaux sont montés libres en rotation sur des supports solidaires du rotor appelés manille et se dirigent vers l'extérieur sous l'effet de la force centrifuge lorsque le rotor tourne ; un démontage intempestif des couteaux, même lorsque la faucheuse vient heurter des objets durs tels que des pierres ou autres, est évidemment empêché pendant le fonctionnement de la machine.

Du fait que le tranchant des couteaux peut s'émousser ou s'ébrécher après un usage prolongé, ou après avoir heurté un objet dur, il est nécessaire de pouvoir retirer lesdits couteaux pour les remplacer.

A cet effet, les couteaux sont chacun montés de manière amovible sur deux pattes du support à l'aide d'une manille. Pour cela, les couteaux comprennent au moins une lame, de préférence deux lames associées de manière à former un « Y », chaque couteau étant muni d'un orifice constituant un oeillet au travers duquel est insérée la manille, laquelle est elle-même montée libre en rotation sur une tige filetée de retenue traversant les deux pattes du support. Les couteaux et la manille peuvent ainsi pivoter selon des axes parallèles à l'axe de rotation du rotor, comme cela est décrit dans les documents de brevet FR 2 651 087 et FR 1 468 662.

Le plus souvent, la manille présente une forme en « U » dont les branches sont situées entre les deux pattes du support de sorte que le couteau est suspendu dans la zone arrondie de la manille, tandis qu'une entretoise est insérée entre les branches de la manille et traversée par la tige filetée de retenue. Le document de brevet EP 1 297 737 illustre un tel montage.

Le document US-A-3 527 038 décrit également un dispositif similaire illustrant l'arrière plan technologique le plus proche de la présente invention.

Cependant, ce type de montage ne donne pas entièrement satisfaction. En effet, ce montage est relativement long à réaliser. Sachant qu'un rotor de débroussailleuse peut compter plusieurs dizaines de couteaux de ce type, la perte de temps lors des opérations de montage/démontage devient rapidement importante et coûteuse. De plus, ce système nécessite souvent un outillage approprié qui n'est pas toujours disponible lorsqu'il s'agit de démonter un couteau endommagé. Par ailleurs, l'utilisation d'une entretoise ajoute au système une pièce qui peut facilement se perdre. Cette entretoise peut également gêner la rotation des couteaux si elle est mal positionnée ou si ses dimensions sont mal adaptées à la manille et à la tige filetée de retenue, ou bien provoquer des vibrations pouvant être gênantes d'un point de vue acoustique ou fragiliser les branches de la manille.

Un but de la présente invention est donc de résoudre les problèmes cités précédemment à l'aide d'une solution simple à mettre en oeuvre et moins onéreuse que celles de l'art antérieur pour permettre un montage/démontage rapide des couteaux, sans utilisation d'outillage.

Pour cela, l'invention propose de modifier la conception de la manille et des couteaux, notamment grâce à la coopération d'une fente latérale ménagée dans la manille et d'une zone d'épaisseur affinée ménagée dans le couteau.

Plus précisément, la présente invention a pour objet un dispositif de montage/démontage d'au moins un couteau sur un rotor de machine agricole, en particulier de faucheuse ou de débroussailleuse, comprenant une manille destinée à être fixée de manière pivotante sur un support du rotor, la manille comportant deux branches opposées qui sont reliées par une portion courbe et dont l'une d'elles comporte une interruption délimitant une fente latérale ayant une largeur déterminée et située dans une zone éloignée de la portion courbe reliant les deux branches de la manille, et au moins un couteau monté libre sur la portion courbe, le couteau comportant un anneau de suspension présentant localement au moins un amincissement dont l'épaisseur est sensiblement inférieure à la largeur de la fente, **caractérisé en ce que** les deux branches de la manille sont réalisées d'un seul tenant avec un manchon situé en face de la portion courbe et comprenant un orifice cylindrique axial, le manchon étant prévu pour recevoir des moyens de fixation de la manille sur le support du rotor.

Selon des modes de réalisation préférés de la présente invention :
- la fente est délimitée par deux entailles en forme de « V » dont les sommets respectifs font saillie l'un en face de l'autre et définissent la largeur de la fente ;
- le manchon comprend une ouverture débouchant sur les faces frontale et dorsale de la manille et communiquant avec les extrémités de l'orifice cylindrique axial;
- la manille est fixée sur le support par l'intermédiaire d'une tige filetée traversant l'orifice cylindrique axial du manchon, la tige filetée prenant appui sur deux pattes du support qui encadrent le manchon et étant immobilisée axialement par au moins un écrou de maintien ;
- un ergot de retenue fait saillie à l'intérieur de la manille, à proximité de la fente ; et
- le dispositif comprend deux couteaux.identiques montés dos à dos sur la manille pour former un « Y », chaque couteau comprenant un anneau de suspension se prolongeant par une lame inclinée par rapport à ce dernier et présentant au moins un tranchant.

La présente invention se rapporte également à un outil pour machine agricole, en particulier pour une faucheuse ou une débroussailleuse, comprenant un rotor muni de supports sur chacun desquels est fixé un dispositif de montage/démontage de couteau tel que défini précédemment.

La présente invention concerne en outre une machine agricole, notamment une faucheuse ou une débroussailleuse, équipée d'un tel outil.

L'invention va maintenant être décrite plus en détail en référence à des modes de réalisation particuliers donnés à titre d'illustration uniquement et représentés sur les figures annexées dans lesquelles :
- La figure 1 est une vue en perspective d'un outil de coupe pour machine agricole de type faucheuse ou débroussailleuse,
- la figure 2 est une vue en perspective d'un dispositif de montage/démontage de couteau selon la présente invention ;
- la figure 3 est une vue en perspective éclatée de la figure 2 ;
- la figure 4 est une vue en perspective d'une manille du dispositif de la figure 1 ;
- la figure 5 une vue de face de la manille représentée sur la figure 4 ;
- la figure 6 est une vue de côté de la figure 5 ;
- la figure 7 est une vue en perspective d'un couteau du dispositif de la figure 2 ;
- la figure 8 est une vue de face du couteau représenté sur la figure 7 ; et
- la figure 9 est une vue de côté de la figure 7.

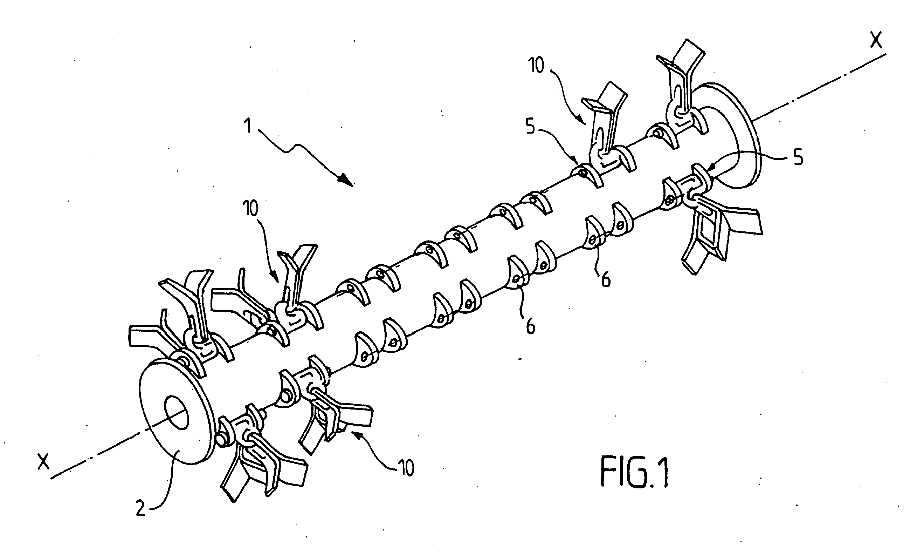

La figure 1 est une vue en perspective d'un outil 1 adapté pour être monté sur une machine agricole telle qu'une faucheuse ou une débroussailleuse, par exemple pour talus d'autoroute. Cet outil 1 comprend un rotor 2 de type connu monté rotatif sur un axe XX perpendiculaire à la direction d'avance de la machine agricole.

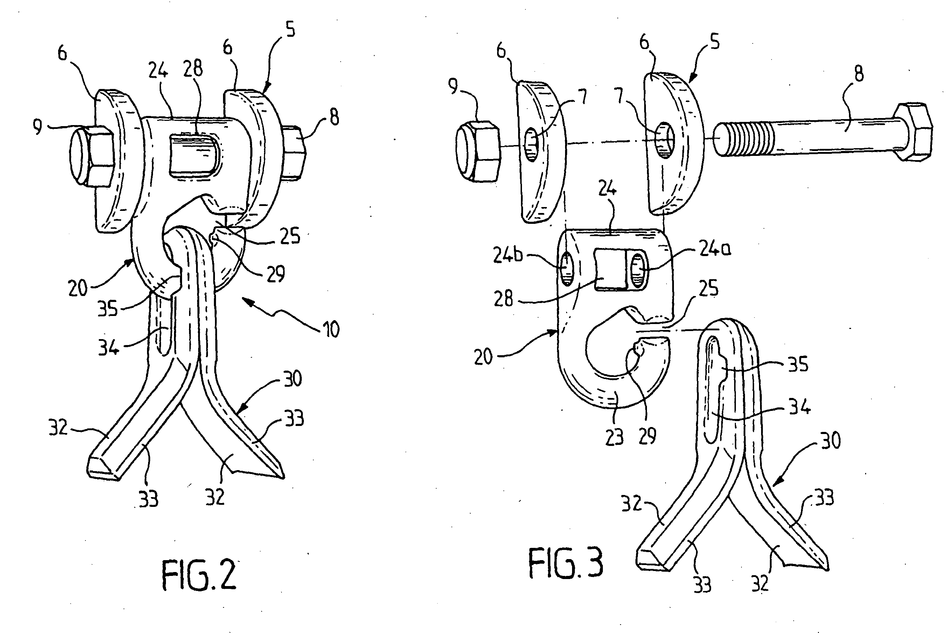

Plusieurs supports 5 sont solidaires du rotor 2, par exemple par soudage. Ces supports 5 sont répartis sur la longueur et la circonférence du rotor 2 pour couvrir une surface de coupe la plus étendue possible. Chaque support 5 est essentiellement constitué par deux pattes 6 se faisant face et percées chacune d'un orifice traversant 7 (figure 3). L'outil 1 comprend en outre plusieurs dispositifs 10 de montage/démontage de couteau montés sur les supports 5 et décrits plus en détail ci-après.

Conformément aux figure 2 et 3, chaque dispositif de montage/démontage 10 comporte une manille droite 20 destinée à être montée de manière pivotante entre les pattes 6 du support 5 correspondant. Le dispositif de montage/démontage 10 comprend également au moins un couteau 30 monté libre sur la manille 20.

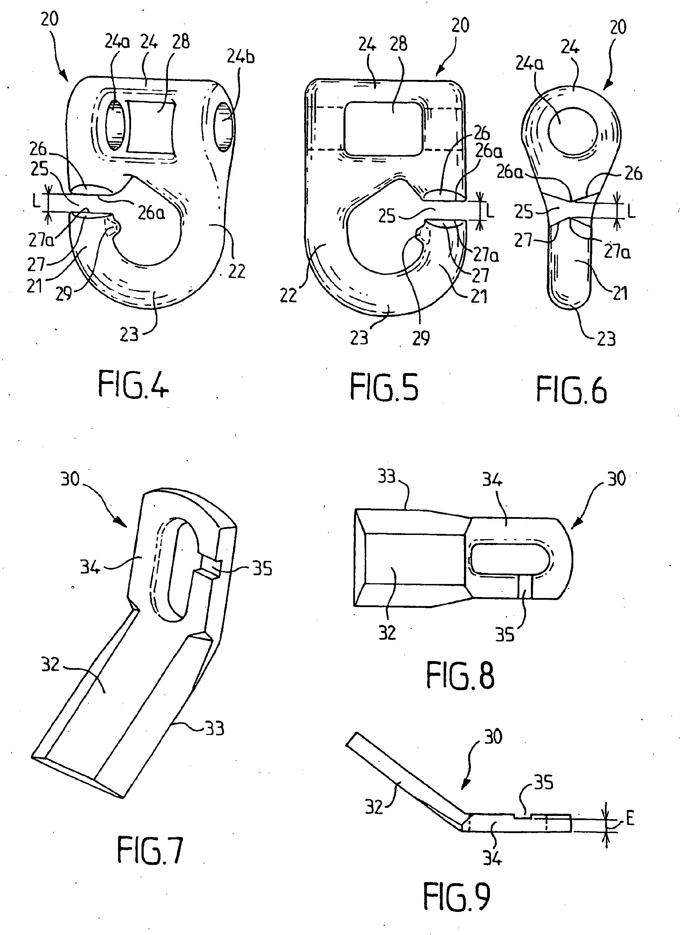

Comme cela est visible plus en détail sur les figures 4 à 6, la manille 20 comprend deux branches parallèles 21 et 22 situées l'une en face de l'autre et se rejoignant en une portion courbe 23 où est suspendu le couteau 30 de manière libre (figure 2). A l'opposé de cette portion courbe 23, se trouve une partie réalisée d'un seul tenant avec les branches 21 et 22, formant un manchon 24 sensiblement rectiligne destiné notamment à rigidifier lesdites branches à la manière d'une entretoise. On comprend par l'expression « d'un seul tenant » que le manchon 24 et les branches 21 et 22 sont réalisés d'une seule pièce venue de matière.

Le manchon 24 est traversé par un orifice cylindrique axial comportant deux extrémités latérales 24a et 24b. Le manchon 24 est adapté pour recevoir une tige filetée de retenue 8 le traversant (figures 2 et 3). Le manchon 24 présente une large ouverture transversale 28 s'étendant perpendiculairement à l'orifice axial, de manière à alléger son poids sans réduire notablement sa résistance aux contraintes. L'ouverture 28 débouche sur les faces frontale et dorsale de la manille 20 et communique avec des extrémités 24a et 24b de l'orifice cylindrique axial.

La manille 20 est réalisée en métal résistant aux chocs, par exemple en acier estampé à chaud. Elle présente un contour fermé à l'exception d'une fente latérale 25 réalisée dans la branche 21, dans une zone éloignée de la portion courbe 23 et proche du manchon 24. La fente 25 est délimitée par deux entailles 26 et 27 réalisées dans la branche 21. Les entailles 26 et 27 présentent chacune une forme de « V » dont les sommets respectifs 26a et 27a font saillie l'un en face de l'autre et définissent la largeur L de la fente 25. Ainsi, la fente 25 forme une interruption locale de matière dans la manille 20 pour permettre le montage/démontage du couteau 30, comme cela sera décrit ultérieurement.

Tel qu'illustré sur les figures 2 et 3, deux couteaux identiques 30 sont disposés dos à dos de manière à former un fléau en forme de « Y ». Chaque couteau 30 comporte un anneau de suspension fermé 34 se prolongeant par une lame 32 inclinée par rapport à ce dernier et présentant au moins un tranchant 33. L'anneau de suspension 34 présente localement un amincissement de matière 35 dont l'épaisseur E est sensiblement inférieure à la largeur L de la fente latérale 25 de la manille 20.

Un ergot de retenue 29 est également prévu à proximité immédiate de la fente 25 et fait saillie à l'intérieur de la manille 20, comme cela est visible sur les figures 2 à 5. Ainsi, une fois le couteau 30 suspendu à la manille 20 au niveau de la portion courbe 23 (figure 2), il est retenu en position par l'ergot 29 qui empêche son éjection intempestive tout en permettant son montage/démontage par de simples manipulations décrites ci-après.

L'utilisation du dispositif de montage/démontage 10 est la suivante. Les couteaux 30 sont suspendues sur la manille 20 en insérant leurs anneaux de suspension respectifs 34 dans celle-ci, ou inversement. Pour réaliser cette opération, il convient de placer l'amincissement de matière 35 de l'anneau 34 de chaque couteau 30 en regard de la fente latérale 25 de la manille 20, puis d'insérer chaque couteau dans la manille 20 par cette fente 25. Ceci est rendu possible en raison du fait que l'épaisseur E de l'amincissement de matière 35 (figure 9) est légèrement inférieure à la largeur L de la fente 25.

Une fois cet ensemble réalisé, il suffit de venir placer la manille 20 entre les pattes 6 du support 5 en positionnant le manchon 24 au regard des orifices 7. Ensuite, une tige filetée 8 munie d'une tête est passée au travers des orifices 7 des pattes 6 et des extrémités 24a et 24b de l'orifice axial du manchon 24. La tige filetée 8 est alors bloquée en translation axiale par un écrou de maintien 9 (figures 2 et 3).

Ainsi, chaque couteau 30 peut pivoter librement par rapport à la manille 20 selon un axe parallèle à l'axe XX du rotor, et osciller également latéralement sur la portion courbe 23 de ladite manille 20.

La manille 20 peut quant à elle pivoter par rapport au support 5 autour de la tige filetée 8 qui définit également un axe de pivotement parallèle à l'axe XX du rotor.

Grâce à la combinaison de la fente latérale 25 et de l'amincissement 35, le montage et le démontage du couteau 30 sur la manille 20 sont extrêmement faciles. Cela n'empêche pas au couteau 30 de rester suspendu à la manille 20 tout au long de son utilisation, par exemple lors d'un fauchage de bas-côté de route, notamment grâce à la présence de l'ergot 29 et en raison du fait que l'épaisseur de l'anneau de suspension 34 du couteau 30 est supérieure à la largeur L de la fente 25, sauf à l'endroit de l'amincissement de matière 35.

Il doit être bien entendu que la description détaillée de l'objet de l'Invention, donnée uniquement à titre d'illustration, ne constitue en aucune manière une limitation, les équivalents techniques étant également compris dans le champ de la présente invention comme défini par les revendications annexées.

Ainsi, le nombre de couteaux 30 peut être supérieur à deux, par exemple l'outil peut comprendre deux couteaux latéraux formant un Y et un couteau central droit interposé entre les couteaux latéraux.

La partie tranchante 33 de chaque couteau 30 peut également prendre la forme d'une cuiller.

Chaque couteau peut présenter deux amincissements de matière se faisant face sur deux côtés parallèles ou situés d'un même côté de l'anneau de suspension 34 mais à des niveaux différents.

La forme en V des entailles 26 et 27 de la fente 25 peut être différente dès lors que la largeur L de la fente reste supérieure à l'épaisseur E de l'amincissement de matière 35 du couteau 30.

La fente 25 peut être réalisée dans la branche 22 de la manille 20 à la place de la branche 21.

La machine agricole peut également être une épareuse.

## Revendications

1. Dispositif (10) de montage/démontage d'au moins un couteau (30) sur un rotor (2) de machine agricole, en particulier de faucheuse ou de débroussailleuse, comprenant une manille (20) destinée à être fixée de manière pivotante sur un support (5) du rotor (2), la manille comportant deux branches opposées (21, 22) qui sont reliées par une portion courbe (23) et dont l'une d'elles comporte une interruption délimitant une fente latérale (25) ayant une largeur déterminée (L) et située dans une zone éloignée de la portion courbe (23) reliant les deux branches de la manille, et au moins un couteau (30) monté libre sur la portion courbe (23), le couteau (30) comportant un anneau de suspension (34) présentant localement au moins un amincissement (35) dont l'épaisseur (E) est sensiblement inférieure à la largeur (L) de la fente (25), **caractérisé en ce que** les deux branches (21, 22) de la manille (20) sont réalisées d'un seul tenant avec un manchon (24) situé en face de la portion courbe (23) et comprenant un orifice cylindrique axial, le manchon étant prévu pour recevoir des moyens de fixation (8, 9) de la manille (20) sur le support (5) du rotor (2).

2. Dispositif selon la revendication 1, **caractérisé en ce que** le manchon (24) comprend une ouverture (28) débouchant sur les faces frontale et dorsale de la manille (20) et communiquant avec les extrémités (24a,24b) de l'orifice cylindrique axial.

3. Dispositif selon la revendication 1 ou 2, **caractérisé en ce que** la manille (20) est fixée sur le support (5) par l'intermédiaire d'une tige filetée (8) traversant l'orifice cylindrique axial du manchon (24), la tige filetée (8) prenant appui sur deux pattes (6) du support (5) qui encadrent le manchon (24) et étant immobilisée axialement par au moins un écrou de maintien (9).

4. Dispositif selon l'une quelconque des revendications 1 à 3, **caractérisé en ce que** la fente (25) est délimitée par deux entailles (26, 27) en forme de « V » dont les sommets respectifs (26a, 27a) font saillie l'un en face de l'autre et définissent la largeur (L) de la fente (25).

5. Dispositif selon l'une quelconque des revendications précédentes, **caractérisé en ce qu'**un ergot de retenue (29) fait saillie à l'intérieur de la manille (20), à proximité de la fente (25).

6. Dispositif selon l'une quelconque des revendications précédentes, **caractérisé en ce qu'**il comprend deux couteaux identiques (30) montés dos à dos sur la manille (20) pour former un « Y », chaque couteau (30) comprenant un anneau de suspension (34) se prolongeant par une lame (32) inclinée par rapport à ce dernier et présentant au moins un tranchant (33).

7. Outil (1) pour machine agricole, en particulier pour faucheuse ou débroussailleuse, comprenant un rotor (2) muni de supports (5) sur chacun desquels est fixé un dispositif (10) de montage/démontage de couteau (30) selon l'une quelconque des revendications précédentes.

8. Machine agricole, notamment faucheuse ou débroussailleuse, équipée d'un outil (1) selon la revendication 7.

## Claims

1. Device (10) for the installation/removal of at least one knife (30) on a rotor (2) of an agricultural machine, in particular of a mower or brush cutter, comprising a shackle (20) designed to be attached pivotingly to a support (5) of the rotor (2), the shackle comprising two opposite branches (21, 22) which are connected by a curved portion (23) and of which one comprises an interruption delimiting a lateral slot (25) having a determined width (L) and being situated in a zone at a distance from the curved portion (23) connecting the two branches of the shackle, and at least one knife (30) mounted freely on the curved portion (23), the knife (30) comprising a suspension ring (34) having at least one thinning (35) the thickness (E) of which is substantially less than the width (L) of the slot (25), **characterized in that** the two branches (21, 22) of the shackle (20) are made in a single piece with a sleeve (24) situated facing the curved portion (23) and comprising an axial cylindrical orifice, the sleeve being designed to receive means (8, 9) for fastening the shackle (20) to the support (5) of the rotor (2).

2. Device according to Claim 1, **characterized in that** the sleeve (24) comprises an opening (28) leading onto the front and back faces of the shackle (20) and communicating with the ends (24a, 24b) of the axial cylindrical orifice.

3. Device according to Claim 1 or 2, **characterized in that** the shackle (20) is attached to the support (5) by means of a threaded shank (8) passing through the axial cylindrical orifice of the sleeve (24), the threaded shank (8) resting on two mounts (6) of the support (5) which are on either side of the sleeve (24) and being axially immobilized by at least one retaining nut (9).

4. Device according to any one of Claims 1 to 3, **characterized in that** the slot (25) is delimited by two V-shaped recesses (26, 27) the respective tops (26a, 27a) of which protrude facing one another and define the width (L) of the slot (25).

5. Device according to any one of the preceding claims, **characterized in that** a retaining lug (29) protrudes on the inside of the shackle (20), close to the slot (25).

6. Device according to any one of the preceding claims, **characterized in that** it comprises two identical knives (30) mounted back-to-back on the shackle (20) in order to form a "Y", each knife (30) comprising a suspension ring (34) extended by a blade (32) inclined relative to the latter and having at least one cutting edge (33).

7. Tool (1) for an agricultural machine, in particular for a mower or brush cutter, comprising a rotor (2) furnished with supports (5) on each of which is attached a device (10) for installing/removing a knife (30) according to any one of the preceding claims.

8. Agricultural machine, particularly a mower or brush cutter, fitted with a tool (1) according to Claim 7.

## Patentansprüche

1. Vorrichtung (10) zum Montieren/Demontieren wenigstens eines Messers (30) auf einem Rotor (2) einer landwirtschaftlichen Maschine, insbesondere einer Mähmaschine oder Freischneidemaschine, die einen Schäkel (20), der dazu bestimmt ist, auf schwenkbare Weise auf einem Halter (5) des Rotors (2) befestigt zu werden, wobei der Schäkel zwei gegenüberliegende Schenkel (21, 22) umfasst, die miteinander durch einen gekrümmten Abschnitt (23) verbunden sind und von denen einer eine Unterbrechung umfasst, die einen seitlichen Schlitz (25) begrenzt, der eine bestimmte Breite (L) hat und sich in einem von dem gekrümmten Abschnitt (23) entfernten Bereich befindet, und wenigstens ein Messer (30) aufweist, das frei an dem gekrümmten Abschnitt (23) befestigt ist, wobei das Messer (30) einen Aufhängungsring (34) aufweist, der örtlich wenigstens eine Verdünnung (35) aufweist, deren Dicke (E) wesentlich geringer als die Breite (L) des Schlitzes (25) ist, **dadurch gekennzeichnet, dass** die zwei Schenkel (21, 22) des Schäkels (20) in einem Stück mit einer Hülse (24) ausgebildet sind, die sich gegenüber dem gekrümmten Abschnitt (23) befindet und eine axiale zylindrische Öffnung aufweist, wobei die Hülse für die Aufnahme von Fixierungseinrichtungen (8, 9) für den Schäkel (20) auf dem Halter (5) des Rotors (2) vorgesehen ist.

2. Vorrichtung nach Anspruch 1, **dadurch gekennzeichnet, dass** die Hülse (24) eine Öffnung (28) aufweist, die auf der Vorder- und der Rückseite des Schäkels (20) mündet und mit den Enden (24a, 24b) der axialen zylindrischen Öffnung in Verbindung steht.

3. Vorrichtung nach Anspruch 1 oder 2, **dadurch gekennzeichnet, dass** der Schäkel (20) an dem Halter (5) mittels einer Gewindestange (8) befestigt ist, die die axiale zylindrische Öffnung des Schäkels (24) durchquert, wobei die Gewindestange (8) an zwei Laschen (6) des Halters (5) anliegt, die die Hülse (24) einrahmen, und axial durch wenigstens eine Wartungsmutter (9) befestigt ist.

4. Vorrichtung nach einem der Ansprüche 1 bis 3, **dadurch gekennzeichnet, dass** der Schlitz (25) durch zwei Einkerbungen (26, 27) in "V"-Form begrenzt ist, deren jeweilige Scheitel (26a, 27a) einander gegenüberliegend vorstehen und die Breite (L) des Schlitzes (25) definieren.

5. Vorrichtung nach einem der vorhergehenden Ansprüche, **dadurch gekennzeichnet, dass** eine Rückhaltenase (29) im Inneren des Schäkels (20) in der Nähe des Schlitzes (25) vorsteht.

6. Vorrichtung nach einem der vorhergehenden Ansprüche, **dadurch gekennzeichnet, dass** sie zwei identische Messer (30) aufweist, die Rücken an Rücken auf dem Schäkel (20) zur Bildung eines "Y" angeordnet sind, wobei jedes Messer (30) einen Aufhängungsring (34) aufweist, der sich durch eine Klinge (32) fortsetzt, die bezüglich letzterem geneigt ist und wenigstens eine Schneide (33) aufweist.

7. Werkzeug (1) für eine landwirtschaftliche Maschine, insbesondere für eine Mähmaschine oder Freischneidemaschine, die einen Rotor (2) aufweist, der mit Haltern (5) versehen ist, auf denen jeweils eine Vorrichtung (10) zum Montieren/Demontieren eines Messers (30) nach einem der vorhergehenden Ansprüche befestigt ist.

8. Landwirtschaftliche Maschine, insbesondere Mähmaschine oder Freischneidemaschine, die mit einem Werkzeug (1) nach Anspruch 7 ausgestattet ist.
